# EUROPÄISCHE PATENTANMELDUNG

(11) **EP 3 406 954 A1**
(43) Veröffentlichungstag der Anmeldung: **28.11.2018**
(21) Anmeldenummer: 18450004.9
(22) Anmeldetag: 15.05.2018
(51) Int. Cl.: F16L 21/03, F16L 47/08

(54) **STECKMUFFENVERBINDUNG FÜR ROHRE**

(30) Priorität: 24.05.2017 AT 2212017
(71) Anmelder: Pipelife Austria GmbH & Co. KG, 2355 Wr. Neudorf (AT)
(72) Erfinder: Haunschmid, Johann, A-3511 Furth (AT); Nigmatullin, Vadim, A-8052 Graz (AT)
(74) Vertreter: Keschmann, Marc

(57) **Zusammenfassung**

Bei einer Muffe (1) für eine Steckmuffenverbindung für Rohre (2), insbesondere Rohre aus thermoplastischem Material, umfassend eine in Umfangsrichtung verlaufende Sicke (4) sowie eine in der Sicke (4) angeordnete, über den Innenumfang der Muffe (1) nach innen vorragende Dichtung (5), ist die Dichtung (5) an einem Indikatorelement (6) angeordnet, welches einen über das Ende (3) der Muffe (1) in Axialrichtung vorragenden Abschnitt (7) umfasst, wobei das Indikatorelement (6) eine höhere Steifigkeit als die Dichtung hat.

## Beschreibung

Die Erfindung betrifft eine Muffe für eine Steckmuffenverbindung für Rohre, insbesondere Rohre aus thermoplastischem Material, umfassend eine in Umfangsrichtung verlaufende Sicke sowie eine in der Sicke angeordnete, über den Innenumfang der Muffe nach innen vorragende Dichtung.

Als Steckmuffenverbindung wird eine Rohrverbindung bezeichnet, deren Dichtwirkung durch Zusammenstecken des Spitzendes eines erstens Rohres und des zu einer Muffe aufgeweiteten Endes eines zweiten Rohres in Verbindung mit einem elastischen Dichtmittel erzielt wird. Rohre mit diesem Rohrverbindungstyp werden beispielsweise bei der Herstellung von Abfluss- und Abwasserleitüngen verwendet. Auf Grund der einfachen Herstellung der Verbindung durch bloßes Zusammenstecken und wegen der geringen Kosten sind Steckmuffenverbindungen weit verbreitet.

Bei Steckmuffenverbindungen ist der korrekte Sitz der Dichtung in der Sicke der Muffe für die Gewährleistung der Dichtheit wesentlich. Hierbei ist es auch vorteilhaft, die Anwesenheit der Dichtung nach dem Zusammenfügen der Rohre kontrollieren zu können.

Um eine solche Kontrollmöglichkeit bei anderen Rohrverbindungen als bei Steckmuffenverbindungen, wie bspw. bei Betonrohren, bereit zu stellen, sind Dichtungen bekannt geworden, die nicht nur in der Sicke angeordnet sind, sondern zusätzlich einen Abschnitt aufweisen, der im eingesetzten Zustand aus der Muffe herausragt und daher im zusammengebauten Zustand der Steckmuffenverbindung sichtbar ist. Die Dichtung weist hierbei einen in der Sicke angeordneten Abschnitt, der die Dichtfunktion erfüllt, und einen daran anschließenden Abschnitt, ein Indikatorelement, auf, das aus der Muffe hervorragt. Diese beiden Abschnitte sind einstückig ausgeführt und bestehen aus dem gleichen, relativ weichen Dichtungsmaterial. Dadurch ist es durch eine einfache visuelle Kontrolle möglich, die Anwesenheit der Dichtung festzustellen.

Das Indikatorelement ist bei den aus dem Stand der Technik bekannten Lösungen an der Innenwand der Muffe angeordnet und befindet sich daher im zusammengefügten Zustand zwischen der Innenwand der Muffe und der Außenwand des eingesteckten Rohrs. Dadurch kommt das Indikatorelement bereits beim Zusammenfügen der Verbindung in Kontakt mit der Außenwand des Rohrs. Beim Einstecken des Rohrs wird das an der Innenwand der Muffe angeordnete Indikatorelement oftmals aufgrund der zwischen dem Rohr und dem Indikatorelement auftretenden Reibung verschoben oder beschädigt. Dabei besteht die Gefahr, dass auch das in der Sicke angeordnete Dichtelement so verschoben bzw. beschädigt wird, dass die Steckmuffenverbindung nicht mehr dicht ist. Falls das Indikatorelement dennoch von außen sichtbar bleibt, sind eine unkorrekte Lage des Dichtelements in der Sicke und eine dadurch entstehende Undichtheit nicht visuell erkennbar, sodass eine eventuell undichte Verbindung verlegt wird. Bei der nachträglichen Reparatur einer undichten Verbindung entstehen hohe Kosten, die üblicherweise wesentlich höher sind als die Herstellungs- bzw. Verlegungskosten.

Es besteht daher die Aufgabe, eine Muffe sowie eine Steckmuffenverbindung gemäß dem Stand der Technik so weiterzubilden, dass ein Verschieben bzw. eine Beschädigung des Indikatorelements beim Einstecken des Rohrs in die Muffe vermieden werden kann, sodass eine zuverlässige visuelle Kontrolle der Anwesenheit der Dichtung möglich ist.

Zur Lösung dieser Aufgabe ist die Muffe der eingangs genannten Art im Wesentlichen derart weitergebildet, dass die Dichtung an einem Indikatorelement angeordnet ist, welches einen über das Ende der Muffe in Axialrichtung vorragenden Abschnitt umfasst, wobei das Indikatorelement eine höhere Steifigkeit als die Dichtung hat. Es ist also vorgesehen, dass das Indikatorelement relativ steif ist, wodurch die Gefahr des Verschiebens des Indikatorelements und des Dichtelements in der Sicke beim Zusammenfügen vermieden bzw. minimiert wird. Insbesondere wird dadurch erreicht, dass das Indikatorelement durch das Zusammenwirken mit der Außenwand des Rohrs nicht, ohne weiteres zusammen geschoben werden kann. Gleichzeitig hat die Dichtung eine geringere Steifigkeit als das Indikatorelement, um eine gute Dichtwirkung zwischen dem Rohr und der Muffe entfalten zu können.

Bevorzugt ist vorgesehen, dass die Dichtung und das Indikatorelement miteinander einstückig ausgebildet sind. Dadurch kann das Einsetzen der Dichtung und des Indikatorelements in einem Arbeitsgang erfolgen.

Eine besonders einfache und effiziente Gestaltung gelingt hierbei dadurch, dass die Dichtung und das Indikatorelement die zwei Komponenten eines Zweikomponenten-Spritzgussteils ausbilden.

Alternativ ist vorgesehen, dass die Dichtung und das Indikatorelement als voneinander gesonderte Teile ausgebildet sind. Dies hat den Vorteil, dass die Dichtungen und die Indikatorelemente flexibler eingesetzt werden können, wobei je nach Bedarf ein Indikatorelement oder kein Indikatorelement verwendet wird.

Bevorzugt ist vorgesehen, dass das Indikatorelement rohrförmig ausgebildet ist. Dies ermöglicht die visuelle Anwesenheitskontrolle von allen Seiten. Gleichzeitig wird das Einsetzen erleichtert, weil das Indikatorelement in der Muffe lediglich in axialer Richtung bewegt werden kann und nicht in radialer Richtung. Alternativ kann das Indikatorelement bspw. als Halbkreis oder Viertelkreis oder streifenförmig ausgebildet sein. Dadurch können die Herstellungskosten reduziert werden.

Um eine höhere Steifigkeit des Indikatorelements zu erzielen, ist bevorzugt vorgesehen, dass das Indikatorelement aus einem anderen, insbesondere härteren Material besteht als die Dichtung.

Weiters ist bevorzugt vorgesehen, dass das Indikatorelement einen geringeren Reibungskoeffizienten als die Dichtung aufweist. Dadurch wird das Einstecken des Rohres in die Muffe weiter erleichtert, sodass es zu einer geringeren Beanspruchung des Indikatorelements kommt.

Bevorzugt ist vorgesehen, dass die Dichtung aus einem thermoplastischen Elastomer (TPE, wie z.B. TPO, TPV und dgl.) besteht. Dadurch wird der Vorteil erzielt, dass diese eine hohe Dichtwirkung, ein gutes Rückstellverhalten und eine gute Chemikalienbeständigkeit aufweist bzw. mit für thermoplastische Kunststoffe gängigen Verarbeitungsverfahren (z.B. Spritzguss) leicht und kostengünstig herstellbar ist.

Bevorzugt ist vorgesehen, dass das Indikatorelement aus einem thermoplastischen Kunststoff, insbesondere Polypropylen (PP), besteht. Dadurch wird der Vorteil erzielt, dass es sich mit der Dichtungskomponente gut verbinden lässt (z.B. im 2-Komponentenspritzgussverfahren).

Weiters ist bevorzugt vorgesehen, dass der Innendurchmesser der Muffe zwischen dem Ende der Muffe und der Sicke größer ausgebildet ist als in einem an die Sicke anschließenden, dem Ende der Muffe abgewandten Bereich der Muffe, wobei die Innendurchmesserdifferenz bevorzugt der doppelten Wandstärke des Indikatorelements entspricht. Durch das Indikatorelement wird der für das einzusteckende Rohr zur Verfügung stehende Platz in radialer Richtung in der Muffe kleiner. Um diesen Effekt zumindest teilweise zu kompensieren, ist ein größerer Innendurchmesser im Bereich des Indikatorelements vorgesehen. Die Wandstärke der Muffe kann hierbei aus produktionstechnischen Gründen aber auf beiden Seiten der Sicke im Wesentlichen gleich gewählt sein.

Falls das Indikatorelement und die Dichtung nicht einteilig ausgebildet sind, ist bevorzugt vorgesehen, dass durch die Dichtung eine Nut bereitstellt ist, in welcher ein Abschnitt des Indikatorelements angeordnet ist. Bevorzugt weist das Indikatorelement einen Vorsprung auf, der ausgebildet ist, um in diese Nut einzugreifen. Diese Anordnung erlaubt das sichere Befestigen des Indikatorelements innerhalb der Muffe. Weiters wird dadurch die Handhabung erleichtert, weil der Benutzer prüfen kann, ob das Indikatorelement in der Nut eingerastet ist und sich daher in der vorgesehenen Lage befindet. Die Nut wird entweder ausschließlich durch die Dichtung gebildet oder, bevorzugt, durch die Dichtung und einen Wandabschnitt der Muffe, insbesondere der Sicke.

Weiters ist besonders bevorzugt vorgesehen, dass das Indikatorelement einen in den Innenraum der Muffe vorragenden Vorsprung aufweist. Dieser Vorsprung kann beim Zusammenfügen der Steckmuffenverbindung in eine im Rohr angeordnete Nut eingebracht werden, sodass eine bessere Verbindung zwischen dem Rohr und dem Indikatorelement sowie in weiterer Folge der Dichtung und der Muffe entsteht. Bevorzugt ist hierbei vorgesehen, dass der Vorsprung eine zur Muffenachse geneigte, vom Muffenende betrachtet ansteigende Fläche aufweist, die ein leichtes Einstecken des Rohres unterstützt und nach dem Einstecken als Zugsicherung gegen ein Entfernen des Rohres aus der Muffe dient. Durch die Neigung wird das Einstecken des Rohres erleichtert und gleichzeitig das Entfernen erschwert.

In einer bevorzugten Ausführung ist vorgesehen, dass das Indikatorelement geradlinig ausgebildet ist und im zusammengefügten Zustand an dem Rohr anliegt.

Alternativ ist vorgesehen, dass der über das Ende der Muffe in Axialrichtung vorragende Abschnitt des Indikatorelements abgewinkelt ausgebildet ist und stirnseitig an der Muffe anliegt. Dadurch wird einerseits erreicht, dass das Rohr einfacher in die Muffe geführt werden kann, weil das Indikatorelement einen Einlaufbereich bildet und andererseits, dass das Indikatorelement besser gegen Verrutschen gesichert ist. Weiters kann das Indikatorelement in dieser Ausführung aus einigen Blickwinkeln besser erkannt werden.

Die Erfindung betrifft weiters eine Steckmuffenverbindung für Rohre, insbesondere Rohre aus thermoplastischem Material, bei der das Spitzende eines ersten Rohres in das zu einer Muffe aufgeweitete Ende eines zweiten Rohres eingesteckt ist, wobei die Muffe erfindungsgemäß ausgebildet ist.

Bevorzugt ist vorgesehen, dass das Indikatorelement einen in den Innenraum der Muffe vorragenden Vorsprung aufweist, der in eine am ersten Rohr ausgebildete Nut eingreift. Dadurch kann eine zusätzliche Zugsicherung erzielt werden.

Die Erfindung betrifft weiters eine Dichtung für eine erfindungsgemäße Muffe, wobei die Dichtung an einem insbesondere rohrförmigen Indikatorelement angeordnet ist, das eine höhere Steifigkeit aufweist als die Dichtung.

Bevorzugt ist vorgesehen, dass die Dichtung und das Indikatorelement miteinander einstückig ausgebildet sind.

Weiters ist bevorzugt vorgesehen, dass die Dichtung und das Indikatorelement die zwei Komponenten eines Zweikomponenten-Spritzgussteils ausbilden.

Bevorzugt ist vorgesehen, dass das Indikatorelement aus einem anderen, insbesondere härteren Material besteht als die Dichtung.

Bevorzugt ist vorgesehen, dass das Indikatorelement einen geringeren Reibungskoeffizienten als die Dichtung aufweist.

Bevorzugt ist vorgesehen, dass die Dichtung aus einem thermoplastischen Elastomer (TPE, wie z.B. TPO, TPV oder dgl.) besteht.

Bevorzugt ist vorgesehen, dass das Indikatorelement aus einem thermoplastischen Kunststoff, insbesondere Polypropylen (PP), besteht.

Bevorzugt ist vorgesehen, dass das Indikatorelement an seinem freien Ende nach außen geradlinig ausgebildet ist.

Die Erfindung wird nachfolgend anhand eines in der Zeichnung schematisch dargestellten Ausführungsbeispiels näher erläutert. In dieser zeigt Fig. 1 eine erfindungsgemäße Muffe gemäß einer ersten Ausführung, Fig. 2 eine erfindungsgemäße Muffe gemäß einer zweiten Ausführung und Fig. 3 eine erfindungsgemäße Steckmuffenverbindung vor dem Zusammenstecken.

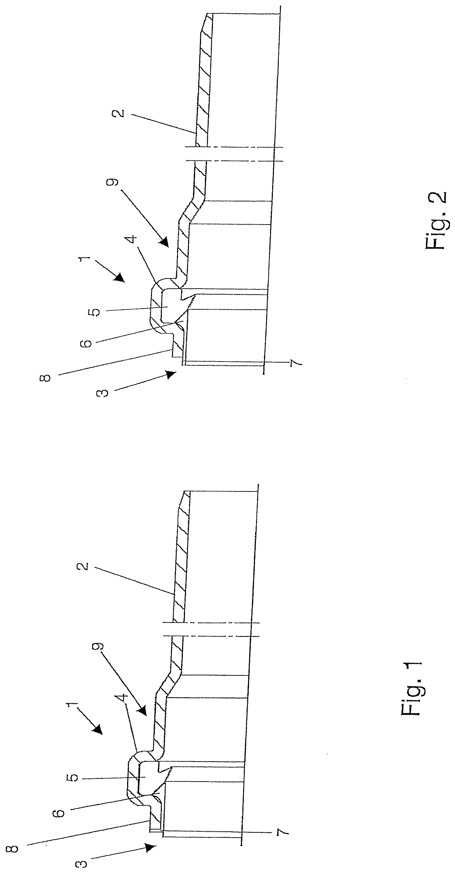

In Fig. 1 ist eine erfindungsgemäße Muffe 1 eines Rohres 2 im Halbschnitt dargestellt. Die Muffe 1 weist ein Ende 3 sowie eine Sicke 4 auf. In der Sicke 4 ist eine über den Innenumfang der Muffe 1 nach innen vorragende ringförmige Dichtung 5 angeordnet. An der Dichtung 5 ist ein Indikatorelement 6 angeordnet, welches einen über das Ende 3 der Muffe 1 vorragenden Abschnitt 7 umfasst. In dieser Ausführung ist der über das Ende der Muffe in Axialrichtung vorragende Abschnitt 7 abgewinkelt ausgebildet und liegt stirnseitig an der Muffe 1 an. Der Abschnitt 7 ist auch von außerhalb der Muffe 1 sichtbar. Hierbei hat das Indikatorelement 6 eine höhere Steifigkeit als die Dichtung 5. Das Indikatorelement 6 und die Dichtung 5 können sowohl einstückig (als 2-Komponenten Spritzgussteil) als auch als voneinander gesonderte Elemente ausgebildet sein. In der dargestellten einteiligen Ausführung weist das Indikatorelement 6 einen dem Ende 3 benachbarten rohrförmigen Abschnitt und eine dichtungsringseitig daran anschließende, nach außen vorstehende Rippe auf, welche in einen abgeschrägten oder abgerundeten Übergangsbereich der Muffe 1 zur Sicke 4 eingreift. Diese Ausbildung ermöglicht eine stabile Positionierung des steiferen Indikatorelements 6 in der Muffe. Weiters stellt die Rippe dichtungsringseitig eine schräg verlaufende und daher relativ große Fläche zur Verfügung, an der im Rahmen des 2-Komponenten-Spritzgusses die stoffschlüssige Verbindung zwischen dem Indikatorelement 6 und dem Dichtungsring 5 erfolgt, sodass eine stabile Verbindung gewährleistet ist. Die gezeigte Ausbildung des Indikatorelements 6 mit Rippe kann aber auch bei einer zweiteiligen Ausführung eingesetzt werden.

Weiters ist ersichtlich, dass die Wandstärke der Muffe 1 in dem Endbereich 8 zwischen dem Ende 3 der Muffe 1 und der Sicke 4 gleich groß ausgebildet ist wie in einem an die Sicke 4 anschließenden, dem Ende 3 der Muffe 1 abgewandten Bereich 9 der Muffe 1. Alternativ ist vorgesehen, dass die Wandstärke der Muffe 1 in dem Endbereich 8 zwischen dem Ende 3 der Muffe 1 und der Sicke 4 geringer ausgebildet ist als in dem an die Sicke 4 anschließenden, dem Ende 3 der Muffe 1 abgewandten Bereich 9 der Muffe 1.

In Fig. 2 ist eine erfindungsgemäße Muffe 1 gemäß einer zweiten Ausführung dargestellt. Im Unterschied zur Ausführung gemäß Fig. 1 ist der Abschnitt 6 des Indikatorelements 5 nicht abgewinkelt, sondern geradlinig ausgebildet und erstreckt sich von der Muffe 1 weg.

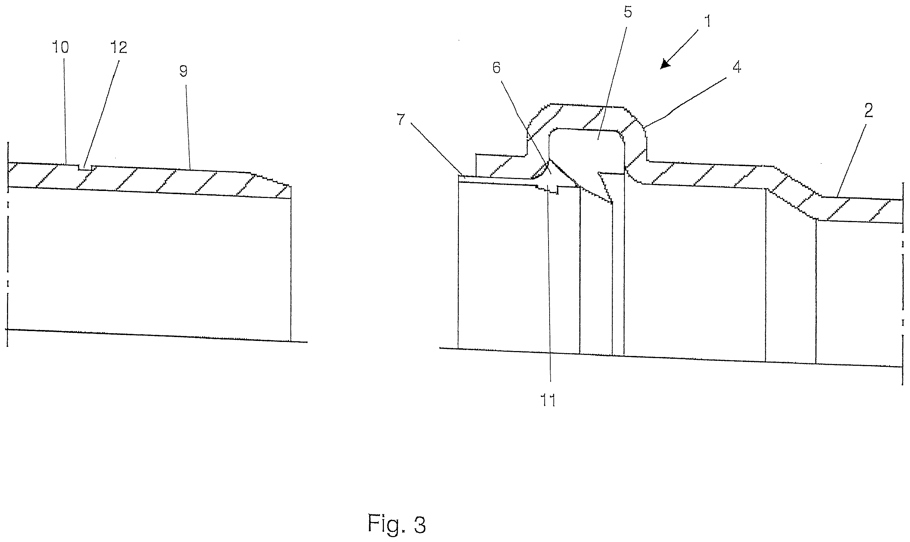

In Fig. 3 sind ein Spitzende 9 eines Rohres 10 und die Muffe 1 des Rohres 2 jeweils im Halbschnitt dargestellt. In dieser Ausführung weist das Indikatorelement 6 einen Vorsprung 11 auf, der ausgebildet ist, um im mit dem Rohr 10 verbundenen Zustand in eine im Rohr 10 angeordnete Nut 12 einzugreifen.

## Patentansprüche

1. Muffe für eine Steckmuffenverbindung für Rohre, insbesondere Rohre aus thermoplastischem Material, umfassend eine in Umfangsrichtung verlaufende Sicke sowie eine in der Sicke angeordnete, über den Innenumfang der Muffe nach innen vorragende Dichtung, **dadurch gekennzeichnet, dass** die Dichtung (5) an einem Indikatorelement (6) angeordnet ist, welches einen über das Ende (3) der Muffe (1) in Axialrichtung vorragenden Abschnitt (7) umfasst, wobei das Indikatorelement (6) eine höhere Steifigkeit als die Dichtung (5) hat.

2. Muffe nach Anspruch 1, **dadurch gekennzeichnet, dass** die Dichtung (5) und das Indikatorelement (6) miteinander einstückig ausgebildet sind.

3. Muffe nach Anspruch 1, **dadurch gekennzeichnet, dass** die Dichtung (5) und das Indikatorelement (6) als voneinander gesonderte Teile ausgebildet sind.

4. Muffe nach Anspruch 1, 2 oder 3, **dadurch gekennzeichnet, dass** die Dichtung (5) und das Indikatorelement (6) die zwei Komponenten eines Zweikomponenten-Spritzgussteils ausbilden.

5. Muffe nach einem der Ansprüche 1 bis 4, **dadurch gekennzeichnet, dass** das Indikatorelement (6) rohrförmig ausgebildet ist.

6. Muffe nach einem der Ansprüche 1 bis 5, **dadurch gekennzeichnet, dass** das Indikatorelement (6) aus einem anderen, insbesondere härteren Material besteht als die Dichtung (5).

7. Muffe nach einem der Ansprüche 1 bis 6, **dadurch gekennzeichnet, dass** das Indikatorelement (6) einen geringeren Reibungskoeffizienten als die Dichtung (5) aufweist.

8. Muffe nach einem der Ansprüche 1 bis 7, **dadurch gekennzeichnet, dass** die Dichtung (5) aus einem thermoplastischen Elastomer (TPE, wie z.B. TPO, TPV oder dgl.) besteht.

9. Muffe nach einem der Ansprüche 1 bis 8, **dadurch gekennzeichnet, dass** das Indikatorelement (6) aus einem thermoplastischen Kunststoff, insbesondere Polypropylen (PP), besteht.

10. Muffe nach einem der Ansprüche 1 bis 9, **dadurch gekennzeichnet, dass** der Innendurchmesser der Muffe (1) zwischen dem Ende (3) der Muffe und der Sicke (4) größer ausgebildet ist als in einem an die Sicke (4) anschließenden, dem Ende der Muffe (1) abgewandten Bereich der Muffe (1), wobei die Innendurchmesserdifferenz bevorzugt der doppelten Wandstärke des Indikatorelements (6) entspricht.

11. Muffe nach einem der Ansprüche 1 bis 10, **dadurch gekennzeichnet, dass** durch die Dichtung (5) eine Nut bereitstellt ist, in welcher ein Abschnitt des Indikatorelements (6) angeordnet ist.

12. Muffe nach Anspruch 11, **dadurch gekennzeichnet, dass** die Nut durch die Dichtung (5) und einen Wandabschnitt der Muffe (1), insbesondere der Sicke (4), gebildet ist.

13. Muffe nach einem der Ansprüche 1 bis 12, **dadurch gekennzeichnet, dass** das Indikatorelement (6) einen in den Innenraum der Muffe (1) vorragenden Vorsprung aufweist.

14. Muffe nach einem der Ansprüche 1 bis 13, **dadurch gekennzeichnet, dass** der über das Ende (3) der Muffe (1) in Axialrichtung vorragende Abschnitt (7) des Indikatorelements (6) abgewinkelt ausgebildet ist und stirnseitig an der Muffe (1) anliegt.

15. Muffe nach einem der Ansprüche 1 bis 13, **dadurch gekennzeichnet, dass** der über das Ende (3) der Muffe (1) in Axialrichtung vorragende Abschnitt (7) des Indikatorelements (6) geradlinig ausgebildet ist.

16. Steckmuffenverbindung für Rohre, insbesondere Rohre aus thermoplastischem Material, bei der das Spitzende eines ersten Rohres in das zu einer Muffe (1) aufgeweitete Ende eines zweiten Rohres (2) eingesteckt ist, wobei die Muffe (1) nach einem der Ansprüche 1 bis 15 ausgebildet ist.

17. Steckmuffenverbindung nach Anspruch 16, **dadurch gekennzeichnet, dass** das Indikatorelement (6) einen in den Innenraum der Muffe (1) vorragenden Vorsprung (11) aufweist, der in eine am ersten Rohr ausgebildete Nut (12) eingreift.

18. Dichtung für eine Muffe nach einem der Ansprüche 1 bis 15, **dadurch gekennzeichnet, dass** die Dichtung (5) an einem insbesondere rohrförmigen Indikatorelement (6) angeordnet ist, das eine höhere Steifigkeit aufweist als die Dichtung (5).

19. Dichtung nach Anspruch 18, **dadurch gekennzeichnet, dass** die Dichtung (5) und das Indikatorelement (6) miteinander einstückig ausgebildet sind.

20. Dichtung nach Anspruch 18 oder 19, **dadurch gekennzeichnet, dass** die Dichtung (5) und das Indikatorelement (6) die zwei Komponenten eines Zweikomponenten-Spritzgussteils ausbilden.

21. Dichtung nach Anspruch 18, 19 oder 20, **dadurch gekennzeichnet, dass** das Indikatorelement (6) aus einem anderen, insbesondere härteren Material besteht als die Dichtung (5).

22. Dichtung nach einem der Ansprüche 18 bis 21, **dadurch gekennzeichnet, dass** das Indikatorelement (6) einen geringeren Reibungskoeffizienten als die Dichtung (5) aufweist.

23. Dichtung nach einem der Ansprüche 18 bis 22, **dadurch gekennzeichnet, dass** die Dichtung (5) aus einem thermoplastischen Elastomer (TPE, wie z.B. TPO, TPV oder dgl.) besteht.

24. Dichtung nach einem der Ansprüche 18 bis 23, **dadurch gekennzeichnet, dass** das Indikatorelement (6) aus einem thermoplastischen Kunststoff, insbesondere Polypropylen (PP), besteht.

25. Dichtung nach einem der Ansprüche 18 bis 24, **dadurch gekennzeichnet, dass** das Indikatorelement (6) an seinem freien Ende nach außen abgewinkelt ausgebildet ist.

26. Dichtung nach einem der Ansprüche 18 bis 24, **dadurch gekennzeichnet, dass** das Indikatorelement (6) an seinem freien Ende nach außen geradlinig ausgebildet ist.
